# EUROPEAN PATENT SPECIFICATION

(11) **EP 2 416 526 B1**
(45) Date of publication and mention of the grant of the patent: **03.06.2015**
(21) Application number: 10758019.3
(22) Date of filing: 23.03.2010
(51) Int. Cl.: H04L 12/24, H04L 29/08, G06F 11/20, G06F 9/48, H04L 29/14

(54) **TASK SWITCHING METHOD, SERVER NODE AND CLUSTER SYSTEM**
VERFAHREN, SERVERKNOTEN UND CLUSTERSYSTEM ZUR UMSCHALTUNG VON AUFGABEN
PROCÉDÉ DE COMMUTATION DE TÂCHE, NOEUD SERVEUR ET SYSTÈME DE GRAPPE

(30) Priority: 01.04.2009 CN 200910132373
(43) Date of publication of application: 08.02.2012
(73) Proprietor: Huawei Technologies Co., Ltd., Longgang District Shenzhen, Guangdong 518129 (CN)
(72) Inventor: ZHANG, Zhiguo, Shenzhen Guangdong 518129 (CN); SUN, Jianli, Shenzhen Guangdong 518129 (CN)
(74) Representative: Pfenning, Meinig & Partner GbR
(86) International application number: PCT/CN2010/071211
(87) International publication number: WO 2010/111917

(56) References cited:
- CN-A- 1 777 192
- CN-A- 101 179 432
- CN-A- 101 217 293
- US-A1- 2002 073 354
- US-A1- 2002 198 996
- US-A1- 2004 249 947
- US-A1- 2006 184 941
- US-A1- 2007 226 333

## Description

### FIELD OF THE INVENTION

The present invention relates to the field of communications technologies, and in particular, to a task switching method, a server node, and a cluster system.

### BACKGROUND OF THE INVENTION

Execution of a task is exclusive in an application system. One task, timed or non-timed, has one instance at any time. To improve a disaster tolerance capability and performance of the application system, a clustering technology is more and more widely used. In a cluster environment, a same system is deployed on each server node and all these server nodes share one database. Therefore, multiple server nodes may fetch a same task (for example, a start or restart process) in the database at the same time. As a result, the task is repetitively loaded by multiple server nodes and therefore one task is executed as multiple tasks.

To avoid one task being executed as multiple tasks, the prior art provides the following solution: bind a task with a server node in a cluster system so that the task can be executed only on the bound server node and therefore the task is prevented from being loaded by other server nodes.

The prior art has the following disadvantages: Although the preceding solution prevents one task from being loaded by multiple server nodes, because the task can be executed only on a specific server node, when the server node fails, the task bound with the server node also fails. A task failure reduces reliability of the system.

US patent application (Pub. No US 2002/0073354 A1) disclosed is a mechanism for handling failover of a data management application for a shared disk file system in a distributed computing environment having a cluster of loosely coupled nodes which provide services.

According to the mechanism, certain nodes of the cluster are defined as failover candidate nodes. Configuration information for all the failover candidate nodes is stored preferably in a central storage. Message information including but not limited to failure information of at least one failover candidate node is distributed amongst the failover candidate nodes. By analyzing the distributing message information and the stored configuration information it is determined whether to take over the service of a failure node by a failover candidate node or not. After a take-over of a service by a failover candidate node the configuration information is updated in the central storage. However, US patent application (Pub. No US 2002/0073354 A1) doses not disclose how to make a task be executed by another active server node when the server node executing the task failed.

### SUMMARY OF THE INVENTION

Embodiments of the present invention provide a task switching method, a server node, a computer program product and a cluster system as disclosed in the appended claims. With technical solutions provided by the embodiments of the present invention, a task that is bound with a failed server node can be executed on another active server node, which improves reliability of the cluster system.

The purpose of the present invention is realized through the following technical solutions:
An embodiment of the present invention provides a task switching method. The method includes:
   obtaining, by a first server node, an update timestamp of a second server node from a database;
   determining, by the first server node, whether the second server node is failed according to update time in the update timestamp; and
   if the second server node is failed, updating, by the first server node, a task bound with the second server node in the database to make the task be bound with an active server node and sending a definition of the task bound with the second server node to the active server node, wherein, the updating a task bound with the second server node in the database to make the task be bound with an active server node comprises: determining, by the first server node, whether the second server node is the originally defined server node of the task; and
   if the second server node is the originally defined server node of the task, updating, by the first server node, the task bound with the second server node in the database to make the task be bound with the first server node;
   if the second server node is not the originally defined server node of the task, updating, by the first server node, the task bound with the second server node in the database to make the task be bound with the originally defined server node of the task.
An embodiment of the present invention provides a server node. The server node includes:
   an obtaining unit, configured to obtain an update timestamp of a second server node from a database;
   a determining unit, configured to determine whether the second server node is failed according to update time in the update timestamp obtained by the obtaining unit; and
   a processing unit, configured to update a task bound with the second server node in the database to make the task be bound with an active server node when the determining unit determines that the second server node is failed, and send a definition of the task bound with the second server node to the active server node, wherein the determining unit is further configured to determine whether the second server node is an originally defined server node of the task if determining that the second server node is failed and the originally defined server node of the task is not the server node; and
   the processing unit is configured to update the task bound with the second server node in the database to make the task be bound with the server node if the determining unit determines that the second server node is the originally defined server node of the task; and configured to update the task bound with the second server node in the database to make the task be bound with the originally defined server node of the task if the determining unit determines that the second server node is not the originally defined server node of the task.
An embodiment of the present invention provides a cluster system. The cluster system includes the server node provided in the embodiment of the present invention.

In the preceding technical solutions of the present invention, the first server node can determine whether the second server node is failed according to the update timestamp of the second server node and when determining that the second server node is failed, updates the task bound with the second server node in the database to make the task be bound with an active server node, so that the task bound with the failed second server node can continue to be executed on the active server node. In this way, it is ensured that a task in the cluster system can be executed so as to improve the reliability of the cluster system.

### BRIEF DESCRIPTION OF THE DRAWINGS

To better explain the technical solutions of the present invention, the accompanying drawings required in the description of the embodiments of the present invention are briefly described below. It is apparent that the accompanying drawings illustrate only some exemplary embodiments of the present invention. Those skilled in the art can derive other drawings from these drawings without any creative effort.
FIG. 1 is a block diagram of a task switching system according to an embodiment of the present invention;
FIG. 2 is a flowchart of a task switching method according to an embodiment of the present invention;
FIG. 3 is a flowchart of a task switching method according to another embodiment of the present invention; and
FIG. 4 is a block diagram of a server node according to an embodiment of the present invention.

### DETAILED DESCRIPTION OF THE EMBODIMENTS

To better explain the technical solutions of the present invention, the embodiments of the present invention are described in detail with reference to the accompanying drawings. It is apparent that the embodiments herein are only some exemplary embodiments of the present invention. Based on the embodiments herein, those skilled in the art can derive other embodiments without any creative effort and such other embodiments all fall into the protection scope of the present invention.

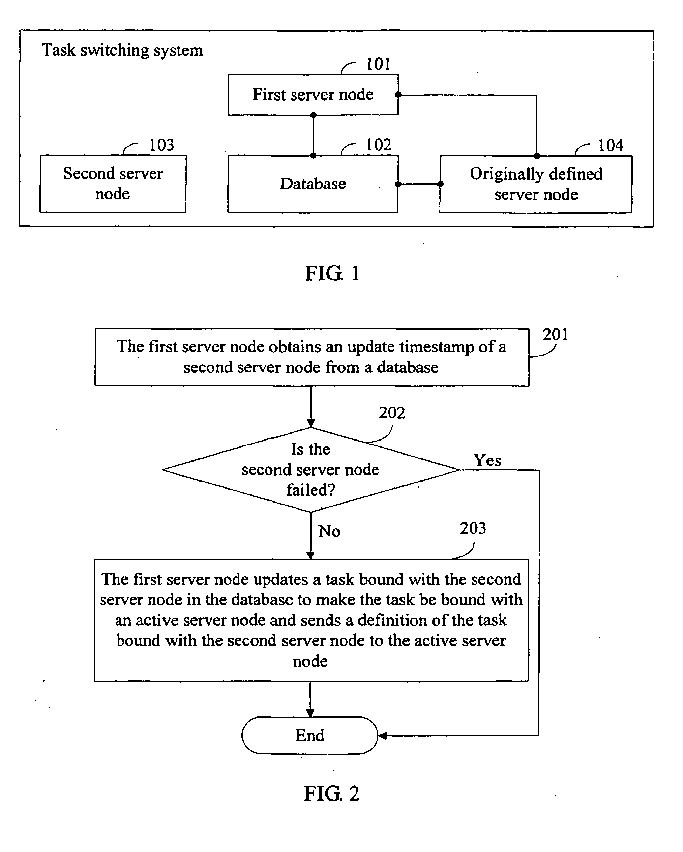

An embodiment of the present invention provides a task switching system. FIG. 1 illustrates a structure of the task switching system, where:
A first server node 101 is configured to: obtain an update timestamp of a second server node 103 from a database 102; and after determining that the second server node 103 is failed according to update time in the update timestamp, update a task bound with the second server node 103 in the database 102 to make the task be bound with the first server node 101 and obtain a definition of the task bound with the second server node 103; or, if the first server node is not an originally defined server node of the task bound with the second server node 103 and an originally defined server node 104 of the task bound with the second server node 103 is active, update the task bound with the second server node 103 in the database 102 to make the task be bound with the originally defined server node 104 of the task and send the definition of the task bound with the second server node 103 to the originally defined server node 104. Generally, the database stores the definition of the task. The definition of the task may include basic information about the task, such as how the task is executed, time range of task execution, and/or space range of task execution.

After obtaining the definition of the task bound with the second server node 103, the first server node 101 can create the task and execute the task according to the definition of the task. After receiving the definition of the task bound with the second server node 103, the originally defined server node 104 can create the task and execute the task according to the definition of the task.

The first server node is a server node that is scanning and querying the database and may be any active server node in a cluster system. The originally defined server node of a task is a server node bound with the task when the task is initially created in the system. The second server node is any other server node in the cluster system. In an existing cluster system, server nodes are updated on a regular or irregular basis.

In this embodiment of the present invention, the first server node in the task switching system determines whether the second server node is failed according to the update timestamp of the second server node and when the second server node is failed, updates the task bound with the second server node to make the task be bound with the first server node or the originally defined server node of the task, so that the task bound with the failed second server node can continue to be executed on the first server node or the originally defined server node. Thereby, a task in the cluster system can be executed and reliability of the cluster system is improved. An embodiment of the present invention provides a task switching method. FIG. 2 illustrates a procedure of the task switching method and particularly a processing procedure of a first server node. The procedure includes the following steps:
201. The first server node obtains an update timestamp of a second server node from a database.

Generally, the second server node is updated on a regular or irregular basis. When the second server node is updated, the database creates an update timestamp in a data record. The update timestamp includes time when the second server node is updated.

Specifically, the first server node scans and queries the database on a regular or irregular basis to obtain the update timestamp of the second server node.
202. The first server node determines whether the second server node is failed according to update time in the update timestamp. If the second server node is failed, the procedure proceeds to step 203; if the second server node is active, the procedure ends.

Specifically, the first server node determines whether the second server node is failed according to a difference between the update time and time when the update timestamp is obtained. A time difference threshold may be set in advance. The first server node compares the obtained time difference with the preset time difference threshold, and if the time difference is greater than the threshold, determines that the second server node is failed. A value of the time difference threshold may be set according to an update period of the second server node. For example, if the second server node is updated every 10 seconds, the time difference threshold may be set to a value greater than 10 seconds.
203. The first server node updates a task bound with the second server node in the database to make the task be bound with an active server node and sends a definition of the task bound with the second server node to the active server node. The procedure ends.

When determining that the second server node is failed, the first server node may obtain the definition of the task bound with the second server node from the database. Then, the active server node can create the task according to the definition of the task, so that the execution of the task is assured.

The active server node may be any active server node in the cluster system. For example, the active server node may be the first server node that scans and queries the database. In this case, the updating, by the first server node, the task bound with the second server node in the database to make the task be bound with the active server node may specifically include: the first server node updates the task bound with the second server node in the database to make the task be bound with the first server node. The active server node may also be an originally defined server node of the task, where the originally defined server node of the task is not the first server node. In this case, the updating, by the first server node, the task bound with the second server node in the database to make the task be bound with the active server node may specifically include: the first server node updates the task bound with the second server node in the database to make the task be bound with the originally defined server node.

From the preceding description, in this embodiment, it is apparent that whether the second server node is failed is determined according to the update timestamp of the second server node. When it is determined that the second server node is failed, the task bound with the second server node is updated to make the task be bound with an active server node, so that the task bound with the failed second server node can continue to be executed on the active server node. In this way, it is ensured that a task in the cluster system is executed so as to improve reliability of the cluster system.

Because one cluster system consists of multiple server nodes, it is possible that another active server node updates the task bound with the second server node when the first server node updates the task bound with the second server node. To avoid such conflict, it may be set that only one server node is allowed to update the task bound with the second server node at the same time. In a task switching method provided in another embodiment of the present invention, before the first server node obtains the update timestamp of the second server node, the procedure further includes:
The first server node updates a flag bit of a database lock.

An exclusive lock is set on the database. The lock is related to a flag bit of the database. Only one server node can modify the flag bit related to the lock at the same time. Before scanning and querying the database, the first server node may update the flag bit of the database lock, so that other server nodes in the cluster system know that a server node is scanning and querying the database. For example, the first server node may update the flag bit of the database lock from 0 to 1.

Because the flag bit of the database lock is updated, after the first server node updates the task bound with the second server node in the database to be make the task bound with an active server node, to ensure normal proceeding of the next scanning and querying, the task switching method provided in the embodiment of the present invention further includes:
The first server node restores the flag bit of the database lock. For example, the first server node may restore the flag bit of the database lock from 1 to 0.

In the task switching method provided in the embodiment of the present invention, the first server node may also update the task bound with the second server node in the database to make the task be bound with the originally defined server node. Before the first server node updates the task bound with the second server node in the database to make the task be bound with an active server node, the first server node may determine whether the second server node is the originally defined server node of the task bound with the second server node; if the second server node is not the originally defined server node of the task, the first server node updates the task bound with the second server node in the database to make the task be bound with the originally defined server node of the task; if the second server node is the originally defined server node of the task bound with the second server node, the first server node updates the task bound with the second server node in the database to make the task be bound with the first server node.

In an actual application process, the originally defined server node of the task bound with the second server node may also be failed, or that the originally defined server node of the task does not support remote switching. Before the first server node updates the task bound with the second server node in the database to make the task be bound with the originally defined server node of the task, the first server node may further determine whether the originally defined server node of the task supports remote switching and/or whether the originally defined server node of the task is active.

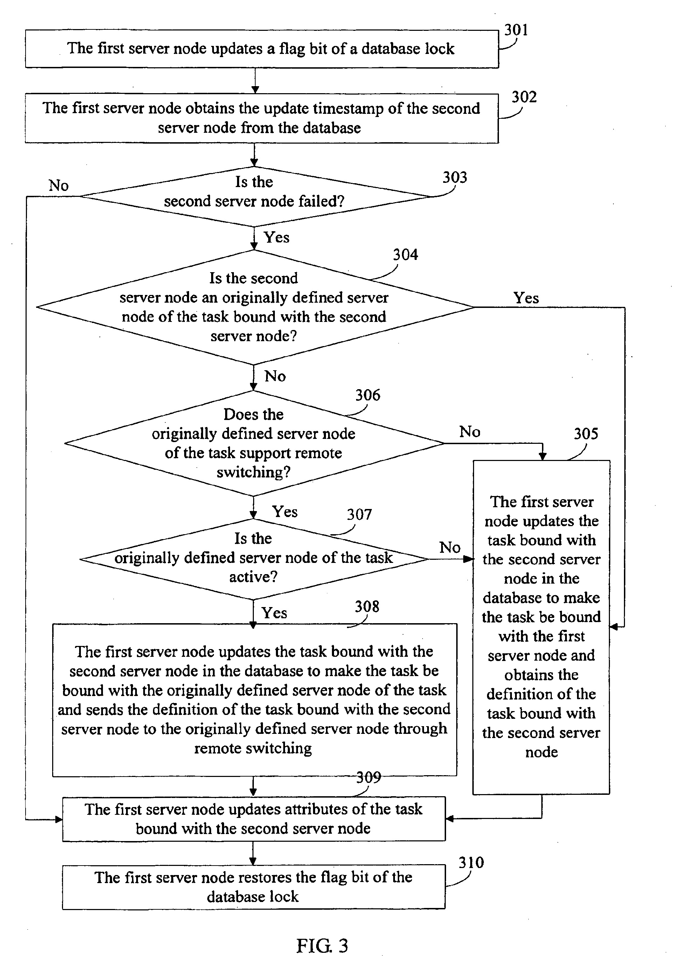

An embodiment of the present invention provides another task switching method. FIG. 3 illustrates a procedure of the task switching method and particularly a processing procedure of a first server node. The procedure includes the following steps:
301. The first server node updates a flag bit of a database lock.
302. The first server node obtains an update timestamp of a second server node from a database.
303. The first server node determines whether the second server node is failed according to update time in the update timestamp. If the second server node is failed, the procedure proceeds to step 304; if the second server node is active, the procedure proceeds to step 309.
304. The first server node determines whether the second server node is an originally defined server node of a task bound with the second server node. If the second server node is the originally defined server node of the task, the procedure proceeds to step 305; if the second server node is not the originally defined server node of the task, the procedure proceeds to step 306.

Specifically, the database stores information about the originally defined server node of each task and information about a server node currently bound with each task. The first server node may query the preceding information from the database and determine whether the second server node is the originally defined server node of the task bound with the second server node according to the information.
305. The first server node updates the task bound with the second server node in the database to make the task be bound with the first server node and obtains a definition of the task bound with the second server node. The procedure proceeds to step 309.

Specifically, the first server node may directly obtain the definition of the task bound with the second server node from the database and then create and execute the task. Tasks that are updated to make the tasks be bound with the first server node may be a portion of all tasks bound with the second server node.
306. The first server node determines whether the originally defined server node of the task supports remote switching. If the originally defined server node of the task supports remote switching, the procedure proceeds to step 307; if the originally defined server node of the task does not support remote switching, step 305 is repeated.

Specifically, information about whether the originally defined server node of the task supports remote switching is stored in the database. The first server node queries the database to determine whether the originally defined server node of the task supports remote switching.
307. The first server node determines whether the originally defined server node of the task is active. If the originally defined server node of the task is active, the procedure proceeds to step 308; if the originally defined server node of the task is failed, step 305 is repeated.

The process of determining whether the originally defined server node of the task is active is executed by referring to step 202.

It is understood that step 306 and step 307 are not order-sensitive. That is, step 307 may precede step 306.
308. The first server node updates the task bound with the second server node in the database to make the task be bound with the originally defined server node of the task and sends the definition of the task bound with the second server node to the originally defined server node through remote switching.

If the originally defined server node of the task is not the first server node that is currently scanning and querying the database, the originally defined server node of the task does not actively obtain the definition of the task bound with the second server node from the database. The first server node may send the definition of the task bound with the failed server node to the originally defined server node through remote switching.

Specifically, the first server node sends a notification message to the originally defined server node of the task. The notification message may include information about the task bound with the second server node and the definition of the task. The originally defined server node of the task may directly create and execute the task according to the task definition in the notification message. Or, the notification message may not include the definition of the task bound with the second server node. After receiving the notification message, the originally defined server node of the task obtains the definition of the task from the database according to the information about the task bound with the second server node and then creates and executes the task according to the definition of the task.
309. The first server node updates attributes of the task bound with the second server node. Generally, the database stores the attributes of the task. The attributes of the task may specifically include information such as which server node the task is bound with.

Updating task attributes may include updating the task bound with the second server node to make the task be bound with which server node, so that the record in the database is kept correct and reliability of the cluster system is thereby improved.
310. The first server node restores the flag bit of the database lock.

In the embodiment of the present invention, some of the tasks bound with the second server node are switched to the originally defined server nodes of the tasks and the rest of the tasks bound with the second server node are updated to make the tasks be bound with the first server node.

From the preceding description, it is apparent that the first server node can determine whether the second server node is failed according to the update timestamp of the second server node, and when the second server node is failed, updates a task bound with the second server node to make the task be bound with an active server node, so that the task bound with the failed second server node can continue to be executed on the active server node. This ensures the execution of a task in the cluster system and improves the reliability of the system. Moreover, in the embodiment of the present invention, the first server node updates and restores the flag bit of the database lock so as to ensure that only one server node is scanning and querying the database at the same time. This further improves the reliability of the system.

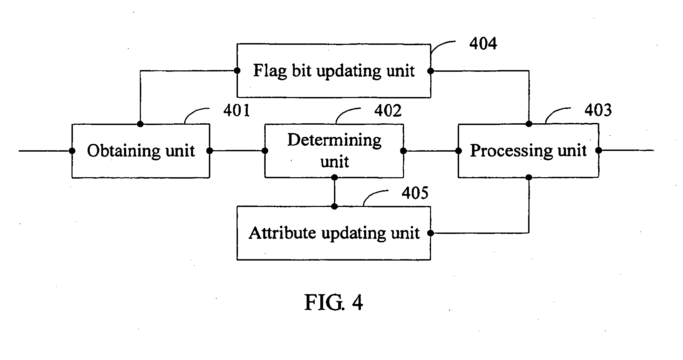

Accordingly, another embodiment of the present invention provides a server node, where the server node may execute the method that is illustrated in FIG. 1, FIG. 2, or FIG. 3 and described in the embodiment. FIG. 4 illustrates a structure of the server node in the embodiment of the present invention. The server node includes: an obtaining unit 401, a determining unit 402, and a processing unit 403.

The obtaining unit 401 is configured to obtain an update timestamp of a second server node from a database.

The second server node may be any server node in a cluster system.

The determining unit 402 is configured to determine whether the second server node is failed according to update time in the update timestamp obtained by the obtaining unit 401.

The processing unit 403 is configured to update a task bound with the second server node in the database to make the task be bound with an active server node when the determining unit 402 determines that the second server node is failed and send a definition of the task bound with the second server node to the active server node.

Specifically, the processing unit 403 can update the task bound with the second server node in the database to make the task be bound with the server node provided in the embodiment of the present invention, or update the task bound with the second server node in the database to make the task be bound with an originally defined server node of the task, or update the task bound with the second server node in the database to make the task be bound with another active server node in the cluster system.

From the preceding description, it is apparent that the server node provided in the embodiment of the present invention can determine whether the second server node is failed according to the update timestamp of the second server node and when determining that the second server node is failed, updates the task bound with the second server node in the database to make the task be bound with an active server node, so that the task bound with the failed second server node can continue to be executed on the active server node. In this way, it is ensured that a task in the cluster system is executed so as to improve reliability of the cluster system.

Further, in another embodiment of the present invention, as shown in FIG. 4, the server node further includes a flag bit updating unit 404, configured to update a flag bit of a database lock, and after the processing unit 403 updates the task bound with the second server node in the database to make the task be bound with an active server node, configured to restore the flag bit of the database lock.

In this case, the obtaining unit 401 may be configured to obtain the update timestamp of the second server node from the database only after the flag bit updating unit 404 updates the flag bit of the database lock.

Further, in another embodiment of the present invention, as shown in FIG. 4, the server node may further include a task attribute updating unit 405, configured to update attributes of the task bound with the second server node after the determining unit 404 determines that the second server node is failed. Specifically, the task attribute updating unit 405 updates the task attributes according to which active server node the task bound with the second server node is updated to make the task be bound with.

Further, in another embodiment of the present invention, the determining unit 402 is configured to determine whether the second server node is the originally defined server node of the task when determining that the second server node is failed and that the originally defined server node of the task is not the server node provided in the embodiment of the present invention.

In this case, the processing unit 403 is configured to update the task bound with the second server node in the database to make the task be bound with the server node provided in the embodiment of the present invention when the determining unit 402 determines that the second server node is the originally defined server node of the task bound with the second server node; and configured to update the task bound with the second server node in the database to make the task be bound with the originally defined server node of the task when the determining unit 402 determines that the second server node is not the originally defined server node of the task bound with the second server node.

Further, in another embodiment of the present invention, because the originally defined server node of the task may not support remote switching, the determining unit 402 is further configured to determine whether the originally defined server node of the task supports remote switching when determining that the second server node is not the originally defined server node of the task bound with the second server node.

In this case, the processing unit 403 is configured to update the task bound with the second server node in the database to make the task be bound with the server node provided in the embodiment of the present invention when the determining unit 402 determines that the originally defined server node of the task does not support remote switching; and configured to update the task bound with the second server node in the database to make the task be bound with the originally defined server node of the task when the determining unit 402 determines that the originally defined server node of the task supports remote switching. Further, in another embodiment of the present invention, because the originally defined server node of the task may also be failed, the determining unit 402 of the server node provided in the embodiment of the present invention is further configured to determine whether the originally defined server node of the task is active when determining that the second server node is not the originally defined server node of the task bound with the second server node.

In this case, the processing unit 403 of the server node provided in the embodiment of the present invention is configured to update the task bound with the second server node in the database to make the task be bound with the server node provided in the embodiment of the present invention when the determining unit 402 determines that the originally defined server node of the task is failed; and configured to update the task bound with the second server node in the database to make the task be bound with the originally defined server node of the task when the determining unit 402 determines that the originally defined server node of the task is active.

From the preceding description, it is apparent that the server node provided in the embodiment of the present invention can determine whether the second server node is failed according to the update timestamp of the second server node and when determining that the second server node is failed, updates the task bound with the second server node to make the task be bound with an active server node, so that the task bound with the failed second server node can continue to be executed on the active server node. In this way, it is ensured that a task in the cluster system is executed so as to improve the reliability of the cluster system. Accordingly, a cluster system provided in an embodiment of the present invention includes the server node provided in the embodiment of the present invention shown in FIG. 4 and the second server node. For a function and a structure of the system, refer to FIG. 1 and the corresponding embodiment. The server node provided in the embodiment shown in FIG. 4 is equivalent to the first server node in the embodiment shown in FIG. 1 and therefore is not further described.

Those skilled in the art may understand that all or part of the steps of the methods provided in the embodiments of the present invention can be implemented by hardware under the instruction of a computer program. The program may be stored in a computer readable storage medium and when the program is executed, the steps of the methods in the preceding embodiments of the present invention may be executed. The storage medium may be a magnetic disk, a compact disk-read only memory (CD-ROM), a read only memory (ROM), or a random access memory (RAM).

Although the task switching method, server node, and cluster system of the present invention are described in detail through exemplary embodiments, the invention is not limited to such embodiments. It is apparent that those skilled in the art can make various modifications and variations to the invention without departing from the idea and scope of the present invention. The invention is intended to cover the modifications and variations provided that they fall within the scope of protection defined by the claims or their equivalents.

## Claims

1. A task switching method, **characterized by** comprising:
obtaining, by a first server node (101), an update timestamp of a second server node (103) from a database;
determining, by the first server node, whether the second server node is failed according to update time in the update timestamp; and
if the second server node is failed, updating, by the first server node, a task bound with the second server node in the database to make the task be bound with an active server node and sending a definition of the task bound with the second server node to the active server node, wherein, the updating a task bound with the second server node in the database to make the task be bound with an active server node comprises: determining, by the first server node, whether the second server node is an originally defined server node of the task, wherein the originally defined server node of the task is the server node bound with the task when the task is initially created; and
if the second server node is the originally defined server node of the task, updating, by the first server node, the task bound with the second server node in the database to make the task be bound with the first server node as the active server node;
if the second server node is not the originally defined server node of the task, updating, by the first server node, the task bound with the second server node in the database to make the task be bound with the originally defined server node, as the active server node, of the tank.

2. The method of claim 1, wherein before the step of obtaining the update timestamp of the second server node from the database, the method further comprises:
updating, by the first server node, a flag bit of a database lock; and
after the step of updating the task bound with the second server node in the database to make the task be bound with the active server node, the method further comprises:
restoring, by the first server node, the flag bit of the database lock.

3. The method of claim 1 or 2, wherein the step of updating the task bound with the second server node in the database to make the task be bound with the active server node comprises:
updating, by the first server node, the task bound with the second server node in the database to make the task be bound with the first server node.

4. The method of claim 1, wherein before the first server node updates the task bound with the second server node in the database to make the task be bound with the originally defined server node of the task, the method further comprises:
determining whether the originally defined server node of the task supports remote switching; and
if the originally defined server node of the task supports remote switching, updating, by the first server node, the task bound with the second server node in the database to make the task be bound with the originally defined server node of the task and sending the definition of the task bound with the second server node to the originally defined server node of the task through remote switching; or
if the originally defined server node of the task does not support remote switching, updating, by the first server node, the task bound with the second server node in the database to make the task be bound with the first server node.

5. The method of claim 1 or 4, wherein before the first server node updates the task bound with the second server node in the database to make the task be bound with the originally defined server node of the task, the method further comprises:
determining, by the first server node, whether the originally defined server node of the task is active; and
if the originally defined server node of the task is active, updating, by the first server node, the task bound with the second server node in the database to make the task be bound with the originally defined server node of the task; or
if the originally defined server node of the task is failed, updating, by the first server node, the task bound with the second server node in the database to make the task be bound with the first server node.

6. The method of claim 1 or 2, wherein if the second server node is failed, the method further comprises:
updating attributes of the task in the database.

7. A server node (101) **characterized by** comprising:
an obtaining unit, configured to obtain an update timestamp of a second server node (103) from a database;
a determining unit, configured to determine whether the second server node is failed according to update time in the update timestamp obtained by the obtaining unit; and
a processing unit, configured to update a task bound with the second server node in the database to make the task be bound with an active server node if the determining unit determines that the second server node is failed, and send a definition of the task bound with the second server node to the active server node, wherein the determining unit is further configured to determine whether the second server node is an originally defined server node of the task if determining that the second server node is failed and the originally defined server node of the task is not the server node, wherein the originally defined server node of the task is the server node bound with the task when the task is initially created; and
the processing unit is configured to update the task bound with the second server node in the database to make the task be bound with the server node as the active server node if the determining unit determines that the second server node is the originally defined server node of the task; and configured to update the task bound with the second server node in the database to make the task be bound with the originally defined server node as the active server node of the task if the determining unit determines that the second server node is not the originally defined server node of the task.

8. The server node of claim 7, further comprising:
a flag bit updating unit, configured to update a flag bit of a database lock, and after the processing unit updates the task bound with the second server node to make the task be bound with the active server node, restore the flag bit of the database lock; and
the obtaining unit, configured to obtain the update timestamp of the second server node from the database if the flag bit updating unit updates the flag bit of the database lock.

9. The server node of claim 7, wherein the determining unit is further configured to determine whether the originally defined server node of the task supports remote switching if determining that the second server node is not the originally defined server node of the task; and
the processing unit is configured to update the task bound with the second server node in the database to make the task be bound with the server node if the determining unit determines that the originally defined server node of the task does not support remote switching; and configured to update the task bound with the second server node in the database to make the task be bound with the originally defined server node of the task if the determining unit determines that the originally defined server node of the task supports remote switching.

10. The server node of claim 7, wherein the determining unit is further configured to determine whether the originally defined server node of the task is active if determining that the second server node is not the originally defined server node of the task; and
the processing unit is configured to update the task bound with the second server node in the database to make the task be bound with the server node if the determining unit determines that the originally defined server node of the task is failed; and configured to update the task bound with the second server node in the database to make the task be bound with the originally defined server node of the task if the determining unit determines that the originally defined server node of the task is active.

11. The server node of claim 7 or 8, further comprising:
a task attribute updating unit, configured to update attributes of the task if the determining unit determines that the second server node is failed.

12. A cluster system, **characterized by** comprising the server node of any one of claims 7 to 11.

13. A computer program product, **characterised by** comprising computer program code, which, when executed by a computer unit, will cause the computer unit to perform all the steps of anyone of claims 1 to 6.

## Patentansprüche

1. Aufgabenwechselverfahren, **dadurch gekennzeichnet, dass** es Folgendes umfasst:
Erhalten durch einen ersten Serverknoten, (101) eines Aktualisierungszeitstempels eines zweiten Serverknotens (103) aus einer Datenbank;
Bestimmen durch den ersten Serverknoten gemäß der Aktualisierungszeit in dem Aktualisierungszeitstempel, ob der zweite Serverknoten ausgefallen ist; und
falls der zweite Serverknoten ausgefallen ist, Aktualisieren durch den ersten Serverknoten einer Aufgabe, die in der Datenbank an den zweiten Serverknoten gebunden ist, damit die Aufgabe an einen aktiven Serverknoten gebunden wird, und Senden einer Definition der Aufgabe, die an den zweiten Serverknoten gebunden ist, zu dem aktiven Serverknoten, wobei das Aktualisieren einer Aufgabe, die an den zweiten Serverknoten gebunden ist, in der Datenbank, damit die Aufgabe an einen aktiven Serverknoten gebunden wird, Folgendes umfasst: Bestimmen durch den ersten Serverknoten, ob der zweite Serverknoten ein ursprünglich definierter Serverknoten der Aufgabe ist, wobei der ursprünglich definierte Serverknoten der Aufgabe der Serverknoten ist, der an die Aufgabe gebunden ist, wenn die Aufgabe initial erzeugt wird; und
falls der zweite Serverknoten der ursprünglich definierte Serverknoten der Aufgabe ist, Aktualisieren der Aufgabe, die an den zweiten Serverknoten gebunden ist, in der Datenbank durch den ersten Serverknoten, damit die Aufgabe an den ersten Serverknoten als der aktive Serverknoten, gebunden wird;
falls der zweite Serverknoten nicht der ursprünglich definierte Serverknoten der Aufgabe ist, Aktualisieren der Aufgabe, die an den zweiten Serverknoten gebunden ist, in der Datenbank durch den ersten Serverknoten, damit die Aufgabe an den ursprünglich definierten Serverknoten als der aktive Serverknoten der Aufgabe gebunden wird.

2. Verfahren nach Anspruch 1 wobei das Verfahren vor dem Schritt des Erhaltens des Aktualisierungszeitstempels des zweiten Serverknotens aus der Datenbank ferner Folgendes umfasst:
Aktualisieren durch den ersten Serverknoten eines Flag-Bits einer Datenbanksperre; und
das Verfahren nach dem Schritt des Aktualisierens der Aufgabe, die an den zweiten Serverknoten gebunden ist, in der Datenbank, damit die Aufgabe an den aktiven Serverknoten gebunden wird, ferner Folgendes umfasst:
Wiederherstellen des Flag-Bits der Datenbanksperre durch den ersten Serverknoten.

3. Verfahren nach Anspruch 1 oder 2, wobei der Schritt des Aktualisierens der Aufgabe, die an den zweiten Serverknoten gebunden ist, in der Datenbank, damit die Aufgabe an den aktiven Serverknoten gebunden wird, Folgendes umfasst:
Aktualisieren der Aufgabe, die an den zweiten Serverknoten gebunden ist, in der Datenbank durch den ersten Serverknoten, damit die Aufgabe an den ersten Serverknoten gebunden wird.

4. Verfahren nach Anspruch 1, wobei das Verfahren, bevor der erste Serverknoten die Aufgabe, die an den zweiten Serverknoten gebunden ist, in der Datenbank aktualisiert, damit die Aufgabe an den ursprünglich definierten Serverknoten der Aufgabe gebunden wird, ferner Folgendes umfasst:
Bestimmen, ob der ursprünglich definierte Serverknoten der Aufgabe entferntes Wechseln unterstützt; und
falls der ursprünglich definierte Serverknoten der Aufgabe entferntes Wechseln unterstützt, Aktualisieren der Aufgabe, die an den zweiten Serverknoten gebunden ist, in der Datenbank durch den ersten Serverknoten, damit die Aufgabe an den ursprünglich definierten Serverknoten der Aufgabe gebunden wird, und Senden der Definition der Aufgabe, die an den zweiten Serverknoten gebunden ist, an den ursprünglich definierten Serverknoten der Aufgabe durch entferntes Wechseln; oder
falls der ursprünglich definierte Serverknoten der Aufgabe entferntes Wechseln nicht unterstützt, Aktualisieren der Aufgabe, die an den zweiten Serverknoten gebunden ist, in der Datenbank durch den ersten Serverknoten, damit die Aufgabe an den ersten Serverknoten gebunden wird.

5. Verfahren nach Anspruch 1 oder 4, wobei das Verfahren bevor der erste Serverknoten die Aufgabe, die an den zweiten Serverknoten gebunden ist, in der Datenbank aktualisiert, damit die Aufgabe an den ursprünglich definierten Serverknoten der Aufgabe gebunden wird, ferner Folgendes umfasst:
Bestimmen durch den ersten Serverknoten, ob der ursprünglich definierte Serverknoten der Aufgabe aktiv ist; und
falls der ursprünglich definierte Serverknoten der Aufgabe aktiv ist, Aktualisieren der Aufgabe, die an den zweiten Serverknoten gebunden ist, in der Datenbank durch den ersten Serverknoten, damit die Aufgabe an den ursprünglich definierten Serverknoten der Aufgabe gebunden wird; oder
falls der ursprünglich definierte Serverknoten der Aufgabe ausgefallen ist, Aktualisieren der Aufgabe, die an den zweiten Serverknoten gebunden ist, in der Datenbank durch den ersten Serverknoten, damit die Aufgabe an den ersten Serverknoten gebunden wird.

6. Verfahren nach Anspruch 1 oder 2, wobei das Verfahren, falls der zweite Serverknoten ausgefallen ist, ferner Folgendes umfasst:
Aktualisieren der Attribute der Aufgabe in der Datenbank.

7. Serverknoten (101), **dadurch gekennzeichnet, dass** er Folgendes umfasst:
eine Erhalteeinheit, die konfiguriert ist, einen Aktualisierungszeitstempel eines zweiten Serverknotens (103) aus der Datenbank zu erhalten;
eine Bestimmungseinheit, die konfiguriert ist gemäß der Aktualisierungszeit in dem Aktualisierungszeitstempel, der durch die Erhalteeinheit erhalten ist, zu bestimmen, ob der zweite Serverknoten ausgefallen ist; und
eine Verarbeitungseinheit, die konfiguriert ist, eine Aufgabe, die an den zweiten Serverknoten gebunden ist, in der Datenbank zu aktualisieren, damit die Aufgabe an einen aktiven Serverknoten gebunden wird, falls die Bestimmungseinheit bestimmt, dass der zweite Serverknoten ausgefallen ist, und eine Definition der Aufgabe, die an den zweiten Serverknoten gebunden ist, zu dem aktiven Serverknoten zu senden, wobei die Bestimmungseinheit ferner konfiguriert ist zu bestimmen, ob der zweite Serverknoten ein ursprünglich definierter Serverknoten der Aufgabe ist, falls bestimmt wird, dass der zweite Serverknoten ausgefallen ist und der ursprünglich definierte Serverknoten der Aufgabe nicht der Serverknoten ist, wobei der ursprünglich definierte Serverknoten der Aufgabe der Serverknoten ist, der an die Aufgabe gebunden ist, wenn die Aufgabe initial erzeugt wird; und
die Verarbeitungseinheit konfiguriert ist, die Aufgabe, die an den zweiten Serverknoten gebunden ist, in der Datenbank zu aktualisieren, damit die Aufgabe an den Serverknoten als der aktive Serverknoten gebunden wird, falls die Bestimmungseinheit bestimmt, dass der zweite Serverknoten der ursprünglich definierte Serverknoten der Aufgabe ist; und konfiguriert ist, die Aufgabe, die an den zweiten Serverknoten gebunden ist, in der Datenbank zu aktualisieren, damit die Aufgabe an den ursprünglich definierten Serverknoten als der aktive Serverknoten der Aufgabe gebunden wird, falls die Bestimmungseinheit bestimmt, dass der zweite Serverknoten nicht der ursprünglich definierte Serverknoten der Aufgabe ist.

8. Serverknoten nach Anspruch 7, der Folgendes umfasst:
eine Flag-Bit-Aktualisierungseinheit, die konfiguriert ist, ein Flag-Bit einer Datenbanksperre zu aktualisieren, und nachdem die Verarbeitungseinheit die Aufgabe, die an den zweiten Serverknoten gebunden ist, aktualisiert, damit die Aufgabe an den aktiven Serverknoten gebunden wird, das Flag-Bit der Datenbanksperre wiederherzustellen; und
eine Erhalteeinheit, die konfiguriert ist, den Aktualisierungszeitstempel des zweiten Serverknotens aus der Datenbank zu erhalten, falls die Flag-Bit-Aktualisierungseinheit das Flag-Bit der Datenbanksperre aktualisiert.

9. Serverknoten nach Anspruch 7, wobei die Bestimmungseinheit ferner konfiguriert ist zu bestimmen, ob der ursprünglich definierte Serverknoten der Aufgabe entferntes Wechseln unterstützt, falls sie bestimmt, dass der zweite Serverknoten nicht der ursprünglich definierte Serverknoten der Aufgabe ist; und
die Verarbeitungseinheit konfiguriert ist, die Aufgabe, die an den zweiten Serverknoten gebunden ist, in der Datenbank zu aktualisieren, damit die Aufgabe an den Serverknoten gebunden wird, falls die Bestimmungseinheit bestimmt, dass der ursprünglich definierte Serverknoten der Aufgabe entferntes Wechseln nicht unterstützt; und konfiguriert ist, die Aufgabe, die an den zweiten Serverknoten gebunden ist, in der Datenbank zu aktualisieren, damit die Aufgabe an den ursprünglich definierten Serverknoten, der Aufgabe gebunden wird, falls die Bestimmungseinheit bestimmt, dass der ursprünglich definierte Serverknoten der Aufgabe entferntes Wechseln unterstützt.

10. Serverknoten nach Anspruch 7, wobei die Bestimmungseinheit ferner konfiguriert ist zu bestimmen, ob der ursprünglich definierte Serverknoten, der Aufgabe aktiv ist, falls bestimmt wird, dass der zweite Serverknoten nicht der ursprünglich definierte Serverknoten der Aufgabe ist; und
die Verarbeitungseinheit konfiguriert ist, die Aufgabe, die an den zweiten Serverknoten gebunden ist, in der Datenbank zu aktualisieren, damit die Aufgabe an den Serverknoten gebunden wird, falls die Bestimmungseinheit bestimmt, dass der ursprünglich definierte Serverknoten der Aufgabe ausgefallen ist; und konfiguriert ist, die Aufgabe, die an den zweiten Serverknoten gebunden ist, in der Datenbank zu aktualisieren, damit die Aufgabe an den ursprünglich definierten Serverknoten der Aufgabe gebunden wird, falls die Bestimmungseinheit bestimmt, dass der ursprünglich definierte Serverknoten der Aufgabe aktiv ist.

11. Serverknoten nach Anspruch 7 oder 8, der ferner Folgendes umfasst:
eine Aufgabenattributaktualisierungseinheit, die konfiguriert ist, Attribute der Aufgabe zu aktualisieren, falls die Bestimmungseinheit bestimmt, dass der zweite Serverknoten, ausgefallen ist.

12. Cluster-System, **dadurch gekennzeichnet, dass** es den Serverknoten nach einem der Ansprüche 7 bis 11 umfasst.

13. Computerprogrammprodukt, **dadurch gekennzeichnet, dass** es Computerprogrammcode umfasst, der dann, wenn er durch eine Computereinheit ausgerührt wird, bewirkt, dass die Computereinheit alle Schritte nach einem der Ansprüche 1 bis 6 ausführt.

## Revendications

1. Procédé de commutation de tâche, **caractérisé en ce qu'**il comprend les étapes suivantes ;
obtenir, par un premier noeud de serveur (101), une estampille temporelle de mise à jour d'un second noeud de serveur (103) depuis une base de données ;
déterminer, par le premier noeud de serveur, si le second noeud de serveur est défaillant selon le temps de mise à jour dans l'estampille temporelle de mise à jour ; et
si le second noeud de serveur est défaillant, mettre à jour, par le premier noeud de serveur, une tâche liée au second noeud de serveur dans la base de données pour faire en sorte que la tâche soit liée à un noeud de serveur actif et envoyer une définition de la tâche liée au second noeud de serveur au noeud de serveur actif, où la mise à jour d'une tâche liée au second noeud de serveur dans la base de données pour faire en sorte que la tâche soit liée à un noeud de serveur actif comprend les étapes suivantes :
déterminer, par le premier noeud de serveur, si le second noeud de serveur est un noeud de serveur défini à l'origine de la tâche, où le noeud de serveur défini à l'origine de la tâche est le noeud de serveur lié à la tâche lorsque la tâche est initialement créée ; et
si le second noeud de serveur est le noeud de serveur défini à l'origine de la tâche, mettre à jour, par le premier noeud de serveur, la tâche liée au second noeud de serveur dans la base de données pour faire en sorte que la tâche soit liée au premier noeud de serveur, en tant que noeud de serveur actif ;
si le second noeud de serveur n'est pas le noeud de serveur défini à l'origine de la tâche, mettre à jour, par le premier noeud de serveur, la tâche liée au second noeud de serveur dans la base de données pour faire en sorte que la tâche soit liée au noeud de serveur défini à l'origine, en tant que noeud de serveur actif, de la tâche.

2. Procédé selon la revendication 1, dans lequel, avant l'étape d'obtention de l'estampille temporelle de mise à jour du second noeud de serveur depuis la base de données, le procédé comprend en outre l'étape suivante :
mettre à jour, par le premier noeud de serveur, un bit indicateur d'un verrou de base de données ; et
après l'étape de mise à jour de la tâche liée au second noeud de serveur dans la base de données pour faire en sorte que la tâche soit liée au noeud de serveur actif, le procédé comprend en outre l'étape suivante :
restaurer, par le premier noeud de serveur, le bit indicateur du verrou de base de données.

3. Procédé selon la revendication 1 ou la revendication 2, dans lequel l'étape de mise à jour de la tâche liée au second noeud de serveur dans la base de données pour faire en sorte que la tâche soit liée au noeud de serveur actif comprend l'étape suivante:
mettre à jour, par le premier noeud de serveur, la tâche liée au second noeud de serveur dans la base de données pour faire en sorte que la tâche soit liée au premier noeud de serveur.

4. Procédé selon la revendication 1, dans lequel, avant que le premier noeud de serveur mette à jour la tâche liée au second noeud de serveur dans la base de données pour faire en sorte que la tâche soit liée au noeud de serveur défini à l'origine de la tâche, le procédé comprend en outre les étapes suivantes :
déterminer si le noeud de serveur défini à l'origine de la tâche supporte la commutation à distance ; et
si le noeud de serveur défini à l'origine de la tâche supporte la commutation à distance, mettre à jour, par le premier noeud de serveur, la tâche liée au second noeud de serveur dans la base de données pour faire en sorte que la tâche soit liée au noeud de serveur défini à l'origine de la tâche et envoyer la définition de la tâche liée au second noeud de serveur au noeud de serveur défini à l'origine de la tâche par l'intermédiaire d'une commutation à distance ; ou
si le noeud de serveur défini à l'origine de la tâche ne supporte pas la commutation à distance, mettre à jour, par le premier noeud de serveur, la tâche liée au second noeud de serveur dans la base de données pour faire en sorte que la tâche soit liée au premier noeud de serveur.

5. Procédé selon la revendication 1 ou la revendication 4, dans lequel, avant que le premier noeud de serveur mettre à jour la tâche liée au second noeud de serveur dans la base de données pour faire en sorte que la tâche soit liée au noeud de serveur défini à l'origine de la tâche, le procédé comprend en outre les étapes suivantes :
déterminer, par le premier noeud de serveur, si le noeud de serveur défini à l'origine de la tâche est actif; et
si le noeud de serveur défini à l'origine de la tâche est actif, mettre à jour, par le premier noeud de serveur, la tâche liée au second noeud de serveur dans la base de données pour faire en sorte que la tâche soit liée au noeud de serveur défini à l'origine de la tâche ; ou
si le noeud de serveur défini à l'origine de la tâche est défaillant, mettre à jour, par le premier noeud de serveur, la tâche liée au second noeud de serveur dans la base de données pour faire en sorte que la tâche soit liée au premier noeud de serveur.

6. Procédé selon la revendication 1 ou la revendication 2, dans lequel, si le second noeud de serveur est défaillant, le procédé comprend en outre l'étape suivante:
mettre à jour des attributs de la tâche dans la base de données.

7. Noeud de serveur (101), **caractérisé en ce qu'**il comprend :
une unité d'obtention, configurée pour obtenir une estampille temporelle de mise à jour d'un second noeud de serveur (103) depuis une base de données ;
une unité de détermination, configurée pour déterminer si le second noeud de serveur est défaillant selon le temps de mise à jour dans l'estampille temporelle de mise à jour obtenue par l'unité d'obtention ; et
une unité de traitement, configurée pour mettre à jour une tâche liée au second noeud de serveur dans la base de données pour faire en sorte que la tâche soit liée à un noeud de serveur actif si l'unité de détermination détermine que le second noeud de serveur est défaillant, et pour envoyer une définition de la tâche liée au second noeud de serveur au noeud de serveur actif, où l'unité de détermination est en outre configurée pour déterminer si le second noeud de serveur est un noeud de serveur défini à l'origine de la tâche s'il est déterminé que le second noeud de serveur est défaillant et
le noeud de serveur défini à l'origine de la tâche n'est pas le noeud de serveur, où le noeud de serveur défini à l'origine de la tâche est le noeud de serveur lié à la tâche lorsque la tâche est initialement créée ; et
l'unité de traitement est configurée pour mettre à jour la tâche liée au second noeud de serveur dans la base de données pour faire en sorte que la tâche soit liée au noeud de serveur, en tant que noeud de serveur actif, si l'unité de détermination détermine que le second noeud de serveur est le noeud de serveur défini à l'origine de la tâche ;
et configurée pour mettre à jour la tâche liée au second noeud de serveur dans la base de données pour faire en sorte que la tâche soit liée au noeud de serveur défini à l'origine, en tant que noeud de serveur actif, de la tâche si l'unité de détermination détermine que le second noeud de serveur n'est pas le noeud de serveur défini à l'origine de la tâche.

8. Noeud de serveur selon la revendication 7, comprenant en outre :
une unité de mise à jour de bit indicateur, configurée pour mettre à jour un bit indicateur d'un verrou de base de données, et, après que l'unité de traitement a mis à jour la tâche liée au second noeud de serveur pour faire en sorte que la tâche soit liée au noeud de serveur actif, pour restaurer le bit indicateur du verrou de base de données ; et
l'unité d'obtention, configurée pour obtenir l'estampille temporelle de mise à jour du second noeud de serveur depuis la base de données si l'unité de mise à jour de bit indicateur met à jour le bit indicateur du verrou de base de données.

9. Noeud de serveur selon la revendication 7, dans lequel l'unité de détermination est en outre configurée pour déterminer si le noeud de serveur défini à l'origine de la tâche supporte la commutation à distance s'il est déterminé que le second noeud de serveur n'est pas le noeud de serveur défini à l'origine de la tâche ; et
l'unité de traitement est configurée pour mettre à jour la tâche liée au second noeud de serveur dans la base de données pour faire en sorte que la tâche soit liée au noeud de serveur si l'unité de détermination détermine que le noeud de serveur défini à l'origine de la tâche ne supporte pas la commutation à distance ; et configurée pour mettre à jour la tâche liée au second noeud de serveur dans la base de données pour faire en sorte que la tâche soit liée au noeud de serveur défini à l'origine de la tâche si l'unité de détermination détermine que le noeud de serveur défini à l'origine de la tâche supporte la commutation à distance.

10. Noeud de serveur selon la revendication 7, dans lequel l'unité de détermination est en outre configurée pour déterminer si le noeud de serveur défini à l'origine de la tâche est actif s'il est déterminé que le second noeud de serveur n'est pas le noeud de serveur défini à l'origine de la tâche ; et
l'unité de traitement est configurée pour mettre à jour la tâche liée au second noeud de serveur dans la base de données pour faire en sorte que la tâche soit liée au noeud de serveur, si l'unité de détermination déterminer que le noeud de serveur défini à l'origine de la tâche est défaillant ; et configurée pour mettre à jour la tâche liée au second noeud de serveur dans la base de données pour faire en sorte que la tâche soit liée au noeud de serveur défini à l'origine de la tâche, si l'unité de détermination détermine que le noeud de serveur défini à l'origine de la tâche est actif.

11. Noeud de serveur selon la revendication 7 ou la revendication 8, comprenant en outre :
une unité de mise à jour d'attribut de tâche, configurée pour mettre à jour des attributs de la tâche si l'unité de détermination détermine que le second noeud de serveur est défaillant.

12. Système de grappes, **caractérisé en ce qu'**il comprend le noeud de serveur de l'une quelconque des revendications 7 à 11.

13. Produit programme informatique, **caractérisé en ce qu'**il comprend un code de programme informatique qui, lorsqu'il est exécuté par une unité informatique, amènera l'unité informatique à exécuter toutes les étapes de l'une quelconque des revendications 1 à 6.
